# EUROPEAN PATENT APPLICATION

(11) **EP 4 191 250 A1**
(43) Date of publication of application: **07.06.2023**
(21) Application number: 21850032.0
(22) Date of filing: 10.02.2021
(51) Int. Cl.: G01N 35/04

(54) **AUTOMATIC ANALYSIS DEVICE**

(30) Priority: 28.07.2020 JP 2020127063
(71) Applicant: HITACHI HIGH-TECH CORPORATION, Tokyo 105-6409 (JP)
(72) Inventor: JOJI, Akira, Tokyo 105-6409 (JP); TAKADA, Eiichiro, Tokyo 105-6409 (JP)
(74) Representative: MERH-IP Matias Erny Reichl Hoffmann Patentanwälte PartG mbB
(86) International application number: PCT/JP2021/004933
(87) International publication number: WO 2022/024424

(57) **Abstract**

Provided is an automatic analyzer which does not require a preparation operation of disposing of a reaction vessel on the apparatus in advance and is capable of efficiently performing shifting to an analysis operation.

In a reaction promotion unit 108, a holding position located at a reaction vessel disposal position 202 during a first operation cycle is moved to a reaction vessel setting position 201 after an n (n: integer) operation cycle, and from a first operation cycle to an n-th operation cycle, an expendable item transport unit 112 performs an operation of disposing of a reaction vessel from a disposal position without performing an operation of setting the reaction vessel at a setting position in each operation cycle, and performs an operation of setting the reaction vessel at the setting position and an operation of disposing of the reaction vessel from the disposal position in each operation cycle after an (n+1)-th operation cycle.

## Description

### Technical Field

Thepresent invention relates to an automatic analyzer.

### Background Art

An automatic analyzer using a disposable reaction vessel for holding the specimen-reagent mixture is structured to perform disposal of the reaction vessel which has been used for analysis at the end of the analysis operation to prevent the used reaction vessel from remaining in the device after the end of the analysis operation. If the analysis operation is interrupted without being successfully finished, the reaction vessel supposed to have been disposed of when the analyzer is stopped may be left therein. The automatic analyzer using the disposable reaction vessel is structured to perform disposal of the reaction vessel remaining in the device, which is supposed to have been disposed of in the analysis preparation process to be executed before start of the specimen measurement in response to the user's request, to start the analysis. This makes the turnaround time of the specimen to be measured immediately after the start of the analyzer longer than the turnaround term of the specimen in the continuous analysis by the time taken for the analysis preparation operation.

Meanwhile, Patent Literature 1 discloses the technique for reducing the turnaround time by checking presence/absence of the remaining reaction vessel for disposal of such reaction vessel only at the position where the specimen is inspected firstly after the start of the operation, and checking the presence/absence for disposal at the other positions in the subsequent operation state.

### Citation List

### Patent Literature

Patent Literature 1: Japanese Unexamined Patent Application Publication (translation of PCT Application) No. 2011/078118

### Summary of Invention

### Technical Problem

In Patent Literature 1, it is determined about presence/absence of the reaction vessel at the position on the reaction vessel setting mechanism by opening/closing the gripping mechanism of the reaction vessel transport mechanism. If presence of the reaction vessel is determined, that is, the reaction vessel remains on the device, disposal of the reaction vessel is performed. The above-described operation is performed at all the positions on the reaction vessel setting mechanism to prevent the use of the remaining reaction vessel for the inspection, which is supposed to have been disposed of. The operation is started without waiting until all the positions are confirmed. Accordingly, this may make a substantially early start of the inspection of the first specimen subsequent to the start of the operation.

In an operation cycle performed by the above-described structure, in which the preparation and subsequent operations are overlapped, operations of the relevant mechanisms, which are required to be performed in one operation cycle period are increased more than those to be performed in other operation cycles. This may cause risks that the single operation cycle period has to be prolonged, and the mechanism has to be multiplexed, or accelerate operation speeds. The former risk leads to increase in the inspection time, and the latter risk leads to the device cost increase.

### Solution to Problem

An automatic analyzer according to an embodiment of the present invention includes a reaction promotion unit that has a plurality of holding positions where a reaction vessel is arranged, and -an expendable item transport unit that accesses a first position and a second position of the reaction promotion unit. The reaction promotion unit regularly operates in each operation cycle, and the holding position located at the second position during a first operation cycle is moved to the first position after an n (n: integer) operation cycle. The first position is a position where the expendable item transport unit sets the reaction vessel in the reaction promotion unit and the second position is a position where the expendable item transport unit disposes of the reaction vessel from the reaction promotion unit. From a first operation cycle to an n-th operation cycle, the expendable item transport unit performs an operation of disposing of the reaction vessel from the second position without performing an operation of setting the reaction vessel at the first position in each operation cycle, and performs an operation of setting the reaction vessel at the first position and an operation of disposing of the reaction vessel from the second position in each operation cycle after an (n+1)-th operation cycle. Advantageous Effects of Invention.

The present invention allows efficient shift to the analysis operation by eliminating the need of preliminary disposal of the reaction vessel on the device in the analysis preparation operation.

Other problems, structures, and advantageous effects will be clarified by explanations of the embodiments as described below.

### Brief Description of Drawings

[FIG. 1] FIG. 1 is a diagram illustrating the basic structure of an automatic analyzer.
[FIG. 2] FIG. 2 is schematic view illustrating an expendable item transport unit and a reaction promotion unit.
[FIG. 3] FIG. 3 is a diagram illustrating the timing of disposal and setting of a reaction vessel.
[FIG. 4] FIG. 4 is a time chart illustrating the operation of the expendable item transport unit at the start of analysis operation.
[FIG. 5] FIG. 5 is a time chart for determining a reaction vessel setting and disposal operation of the expendable item transport unit.
[FIG. 6] FIG. 6 is a shift diagram of a position state at each holding position of the reaction promotion unit.
[FIG. 7] FIG. 7 is a diagram illustrating whether or not the reaction vessel is settable, whether or not the reaction vessel is usable, and whether or not the reaction vessel is disposable for each position state.

### Description of Embodiments

The automatic analyzer to which the present invention is applied may be exemplified by, for example, a biochemical automatic analyzer, an automatic immunological analyzer, and an automatic genetic analyzer. The automatic analyzer includes diversified types of devices for analyzing the sample based on the result of the reaction between the sample and the reagent without being limited to the embodiments to be described below. For example, the mass spectrometer used for clinical examinations, and the coagulation analyzer for measuring the blood coagulation time may be exemplified as the automatic analyzer. The present invention is also applicable to the composite system formed by combining those devices with the biochemical automatic analyzer, the automatic immunological analyzer and the like, or the automatic analyzer system formed by applying those devices.

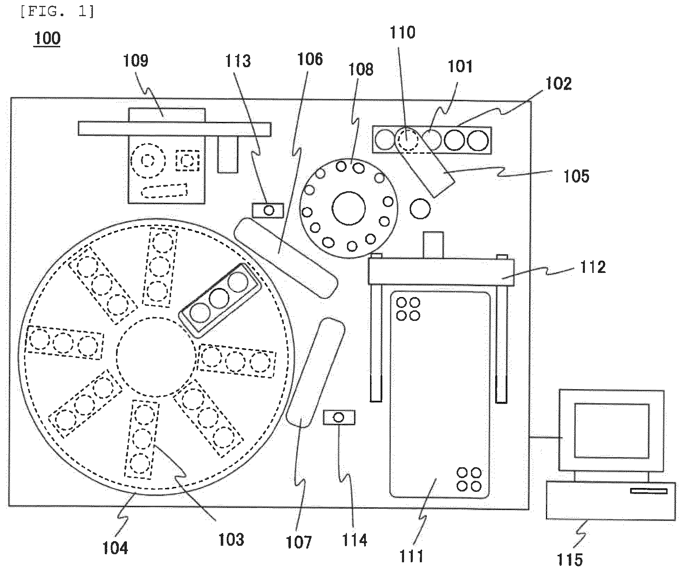

FIG. 1 is a diagram illustrating the basic structure of an automatic analyzer. An automatic analyzer 100 is mainly composed of a specimen transport unit 102 for transporting a specimen vessel 101 which contains the specimen to be analyzed such as a blood collection tube to a specimen aspiration position 110, a reagent storage unit 104 for controlling temperature of a reagent vessel 103 which contains the reagent used for analysis to bring the reagent temperature into a prescribed temperature range, a specimen dispensing unit 105 for dispensing the sample in the specimen vessel 101 onto a reaction vessel, a reagent dispensing unit 106 for dispensing the reagent in the reagent vessel 103 onto the reaction vessel, a stirring unit 107 for stirring particles in the liquid contained in the reagent vessel 103, a reaction promotion unit 108 for setting the reaction vessel which stores the reaction liquid as the specimen-reagent mixture to control the liquid temperature of the reaction liquid to be within a prescribed temperature range, and a measurement unit 109 for optically measuring an amount of the substance in the reaction liquid, having the reaction promoted by the reaction promotion unit 108. An environment temperature measurement sensor is also set for measuring the temperature of an ambient environment where the automatic analyzer is set. Those units are controlled by a control device 115.

The specimen transport unit 102 may be formed into a specimen rack for mounting one or more specimen vessels 101, or a specimen disc for mounting them on a circumference of the disc. When it is formed into the specimen rack, a transport unit such as a transport belt mechanism and a robot arm transports the specimen rack to the aspiration position 110 of the specimen dispensing unit 105.

The reagent storage unit 104 may be structured to have a plurality of specimen vessels 103 arranged on a circumference to rotatably transport an arbitrary reagent vessel to a desired position, or the specimen vessels arranged in a single row, or arrayed in a matrix state.

The measurement unit 109 performs an optical measurement of the reaction liquid in a measurement passage within the unit. Upon measurement, temperature of the reaction liquid in the passage is controlled to be held within a prescribed temperature range. Contents of the measurement include measurement of absorbance of the reaction liquid, measurement of an emission amount upon addition of the reagent to the reaction liquid or voltage application, measurement of the particle number in the reaction liquid, measurement of fluctuation in the current value and the voltage value as a result of contact between the reaction liquid and the electrode film. Correspondingly, the measurement unit 109 includes the photometric device such as a photomultiplier and a photometer, an image pickup device such as the CCD, an ammeter and a voltmeter for measuring fluctuation in current values and voltage values.

The reaction promotion unit 108 holds the reaction vessel temperature within a prescribed temperature range to promote the stable reaction. For example, the reaction promotion unit may be formed into an incubator for temperature control using the heater or the like to increase the peripheral temperature in the state where a plurality of reaction vessels are arranged on the circumference. Alternatively, it may be formed into the thermostatic tank which contains the liquid having its temperature controlled within a prescribed temperature range by circulating the liquid therein for immersing the reaction vessel. The reaction promotion unit 108 has a plurality of holding positions where the reaction vessel is arranged.

Depending on the required analysis performance of the analyzer, the analyzer may use an exchangeable dispensing tip for the part in contact with the specimen every time the specimen is changed, or an unused reaction vessel every time the specimen and the liquid are reacted therein for dispensing the specimen by the specimen dispensing unit 105 in consideration of the influence of the overcarrying of the specimen. Once the dispensing tip or the reaction vessel is used, it will be disposed of. In this case, the expendable item storage unit 111 stores new dispensing tips and new reaction vessels required for performing the analysis for a prescribed time. An expendable item transport unit 112 timely transports them to the site where they are used, or transports them from the site where they have been used to the site where they are disposed of. The reagent dispensing unit 106 and the stirring unit 107 are provided with a reagent dispensing nozzle washing unit 113 and a stirring rod washing unit 114, respectively for washing the part immersed in the reagent in consideration of the influence of the overcarrying.

### First Embodiment

In a first embodiment, the expendable item transport unit 112 has at least one setting position for setting the reaction vessel, and at least one disposal position for disposal of the reaction vessel, which are allocated to the holding positions on the regularly operated reaction promotion unit 108. The automatic analyzer according to the first embodiment does not perform preparation operations for confirming absence/presence of the reaction vessel supposed to have been disposed of for all the holding positions. The automatic analyzer performs the disposal operation of the reaction vessel supposed to have been disposed of through operations of setting and disposal of the reaction vessel in the normal analysis process (operation).

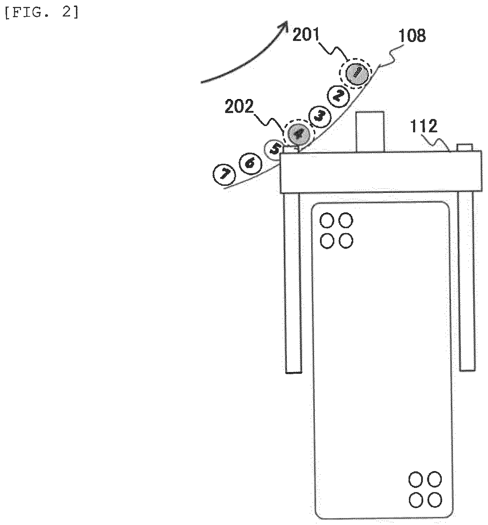

FIG. 2 is a schematic view illustrating the expendable item transport unit 112 and the reaction promotion unit 108. The reaction promotion unit 108 has a plurality of holding positions for holding the reaction vessel. Referring to the drawing, each of the holding positions is indicated by a solid-line circle. A setting position 201 and a disposal position 202 for the reaction vessel are indicated by broken-line circles, through which the expendable item transport unit 112 is accessible to the reaction promotion unit 108. The expendable item transport unit 112 sets the reaction vessel at the holding position which has reached the setting position 201, and takes out the reaction vessel at the holding position which has reached the disposal position 202 for disposal operation. For convenience of explanation referring to FIG. 2, the holding position on the reaction promotion unit 108 is identified by the numerical value in the circle indicating the holding position. In the illustrated example, the holding position which has reached the setting position 201 is designated as a first position, and the holding position which has reached the disposal position 202 is designated as a fourth position.

Each of the holding positions corresponding to the setting position 201 and the disposal position 202 is updated by operations of the reaction promotion unit 108. For example, assuming that the reaction promotion unit 108 is rotated clockwise to move to the holding position with the number incremented by one from the number of the previous holding position on the reaction promotion unit 108 in one operation, the one operation of the reaction promotion unit 108 increments the number allocated to the holding position by one. In the illustrated example of FIG. 2, after one operation performed by the reaction promotion unit 108, the holding position which has reached the setting position 201 becomes the second position, and the holding position which has reached the disposal position 202 becomes the fifth position.

The number of positions to be moved by the reaction promotion unit 108 in one operation, the location and the number of the holding positions which allow the expendable item transport unit 112 to access the reaction promotion unit 108 are not limited. FIG. 2 illustrates the disc-like reaction promotion unit 108. However, the reaction promotion unit 108 may be formed into a rack shape or the like in a non-restrictive manner.

In the analysis operation, the expendable item transport unit 112 sets the unused reaction vessel at the holding position which has reached the setting position 201, and performs disposal of the reaction vessel at the holding position which has reached the disposal position 202 in one operation cycle. Regular operations repeatedly performed by the expendable item transport unit 112 allow the holding position located at the disposal position 202 to reach the setting position 201 a few seconds later.

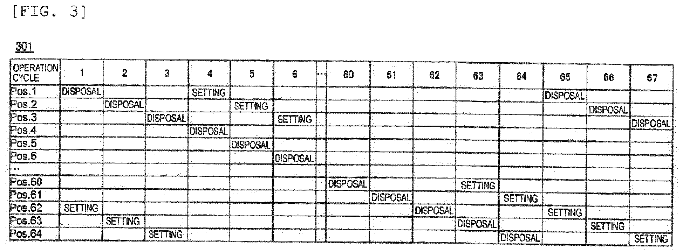

FIG. 3 is a diagram illustrating the timing of disposal and setting of the reaction vessel (301). On the assumption that the reaction promotion unit 108 has 64 holding positions, the diagram shows each timing of disposal and setting of the reaction vessel at the respective holding positions (positions from 1 to 64) in operation cycles of the analyzer. In the first operation cycle, the expendable item transport unit 112 performs disposal of the reaction vessel at the first position located at the disposal position 202. In the fourth operation cycle three operation cycles later, the expendable item transport unit 112 performs setting of the reaction vessel at the first position which has moved to the setting position 201. The reaction promotion unit 108 and the expendable item transport unit 112 perform regular operations according to the operation cycle repeatedly. Disposal of the reaction vessel is securely performed at the holding position which has reached the setting position the predetermined number of cycles before the setting operation.

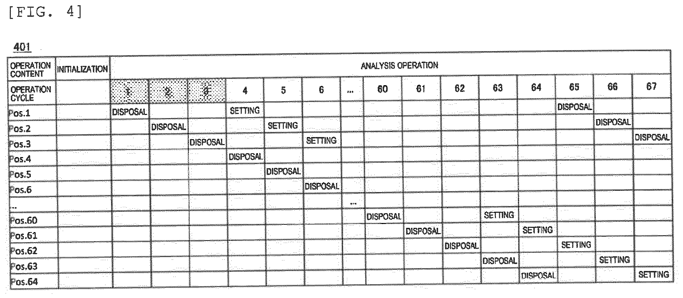

In the embodiment, the above-described relation is applied to perform disposal of the reaction vessel which is supposed to have been disposed of. FIG. 4 represents operations of the expendable item transport unit 112 at the start of analysis operation. The time chart presupposes that the automatic analyzer requires three operation cycles for moving the holding position located at the disposal position 202 to the setting position 201 as represented in FIG. 3. In the time period corresponding to the first three operation cycles of the analysis operation, the expendable item transport unit 112 does not set the reaction vessel. Setting of the reaction vessel is started from the fourth operation cycle. In this case, at the first position located at the setting position 201, the disposal operation has been performed three operation cycles before. Even if the reaction vessel remains at the first position at the end of previous analysis operation, the disposal has been finished in the fourth operation cycle. As described above, even if the reaction vessel which is supposed to have been disposed of remains on the device at the end of the previous analysis operation, disposal of the remaining reaction vessel at the holding position will be done several seconds before setting another reaction vessel. This may eliminate the need of confirmation of all the holding positions of the reaction promotion unit before performing the analysis operation, resulting in efficient shifting to the analysis operation.

In the example, the expendable item transport unit 112 performs setting and disposal of the reaction vessel sequentially in the same operation cycle. For example, in the fourth operation cycle, the reaction vessel is set at the first position, and disposal of the reaction vessel at the fourth position is performed. For the purpose of performing those two operations efficiently, the expendable item transport unit 112 may be operated as follows. That is, the expendable item transport unit 112 transports and sets a new reaction vessel at the holding position located at the setting position 201, and moves directly to the disposal position 202 without returning to the home position. The expendable item transport unit 112 then takes out the reaction vessel set at the holding position located at the disposal position 202, and transports the reaction vessel to the site where disposal is performed. This allows the single expendable item transport unit to easily perform the setting operation and the disposal operation of the reaction vessel in one operation cycle. Each expendable item transport unit for setting and disposal of the reaction vessel does not have to be mounted, resulting in optimally configured mechanism, and cost reduction in the device.

### Second Embodiment

This embodiment sequentially performs disposal and setting of reaction vessels, and further defines each state of the holding positions on the reaction promotion unit for management. This allows identification of the reaction vessel which should not be disposed of, for example, the reaction vessel in the measurement process.

The automatic analyzer according to the first embodiment is configured to regularly perform the setting and disposal of the reaction vessels in the respective operation cycles. The reaction vessel which contains the reaction liquid in the measurement process, and the reaction vessel which contains the specimen or the reagent to be heated will reach the disposal position 202 upon performance of the predetermined number of operation cycles. Disposal of those reaction vessels before the end of analysis may cause problems that, for example, the measurement process is interrupted, and the specimen or the reagent in analysis is lost. For this reason, the automatic analyzer proposed by the embodiment is configured to define each state of the holding positions of the reaction promotion unit 108 to allow identification of the reaction vessel which should not be disposed of, for example, the reaction vessel in the measurement process.

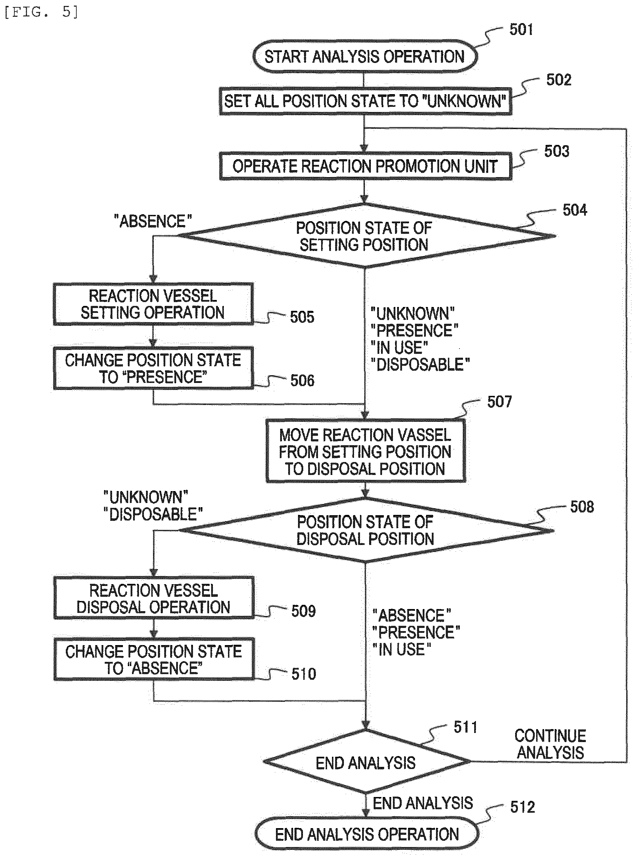

FIG. 5 is a flowchart for determining the reaction vessel setting and disposal operations of the expendable item transport unit 112, which is executed by a control device 115. In response to an instruction of an operator of the automatic analyzer to start the analysis operation (step 501), the control device 115 sets all the holding position states (referred to as "position state") on the reaction promotion unit 108 to "unknown" (step 502). The "unknown" position state represents that absence/presence of the reaction vessel at the holding position is unknown. In response to operation of the reaction promotion unit 108 (step 503), the holding position accessed by the expendable item transport unit 112 is updated. The expendable item transport unit 112 confirms the position state at the holding position located at the setting position after updating (step 504). If the reaction vessel is not set at the holding position (position state = "absence"), the expendable item transport unit 112 sets the reaction vessel at the holding position located at the setting position 201 (step 505), and changes the position state of the holding position to "presence" (step 506). The "presence" position state represents that the reaction vessel at the holding position is identified as the one set in the present analysis operation.

If it is confirmed that the position state of the setting position 201 is other than "absence", that is, any one of "unknown", "presence", "in use", and "disposable" (step 504), the setting position 201 is kept unchanged. The expendable item transport unit 112 moves to the disposal position (step 507). Similar to the process step 504, the expendable item transport unit 112 confirms the position state of the holding position located at the disposal position 202 (step 508). If the position state of the holding position which has reached the disposal position 202 is "unknown" or "disposable", the expendable item transport unit 112 performs disposal of the reaction vessel from the disposable position 202 (step 509), and changes the position state of the holding position to "absence" (step 510). If it is confirmed that the position state of the disposable position 202 is other than the "unknown" or "disposable", that is, any one of "absence", "presence", and "in use" (step 508), the disposal position 202 is kept unchanged, and the process is shifted to the end analysis determination (step 511). In the end analysis determination (step 511), it is determined whether the analysis is continued or finished. If it is determined to continue the analysis, the process returns to the operation of the reaction promotion unit 108 (step 503). If it is determined to finish the analysis, the process performs the end analysis operation (step 512) to finish the analysis operation.

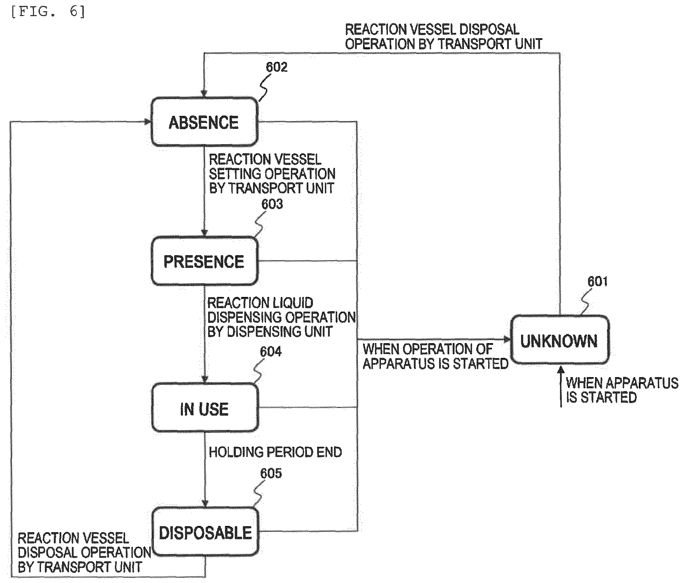

FIG. 6 is a shift diagram of the position state at each holding position of the reaction promotion unit 108. Upon activation of the automatic analyzer, and the analysis operation started by the automatic analyzer, every position state at all the holding states is set to "unknown" irrespective of the actual position state (601). If the expendable item transport unit 112 performs disposal of the reaction vessel at the specific holding position, the position state is shifted to "absence" (602). In the case of the "unknown" position state, the expendable item transport unit 112 performs disposal of the reaction vessel irrespective of the actual presence/absence of the reaction vessel at the holding position. The expendable item transport unit 112 sets the reaction vessel at the holding position in the shifted "absence" position state so that the position state is shifted to "presence" (603). The expendable item transport unit 112 cannot perform setting and disposal of the reaction vessels at the holding position in the "presence" position state.

The specimen dispensing unit 105 or the reagent dispensing unit 106 dispenses the specimen or the reagent onto the reaction vessel at the holding position in the "presence" position state, and the position state is shifted to "in use" (604). The expendable item transport unit 112 cannot perform setting and disposal of the reaction vessels at the holding position in the "in use" position state. The specimen dispensing unit or the reagent dispensing unit is allowed to perform required dispensing operations.

At the end of the measurement process or after the end of the holding period of the reaction promotion unit 108, for example, the end of heating, the reaction vessel at the holding position in the "in use" position state (604) has its position state shifted to the "disposal" (605). The expendable item transport unit 112 is allowed to perform disposal of the reaction vessel at the holding position in the "disposable" position state (605). However, the expendable item transport unit 112 is not allowed to perform setting of such reaction vessel, and the dispensing unit is not allowed to perform dispensing operations. As disposal of the reaction vessel at the holding position in the "disposable" position state (605) is performed, the position state is shifted to the "absence" (602).

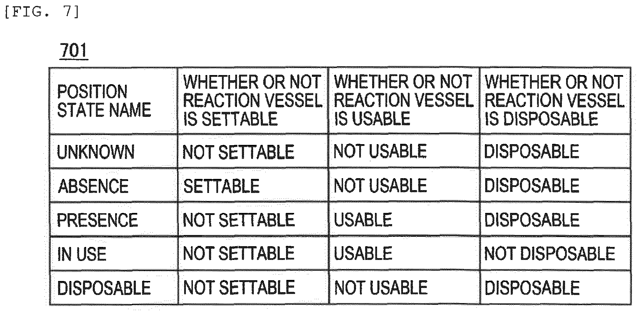

FIG. 7 is a diagram illustrating whether or not the reaction vessel is settable, usable, and disposable in each position state (701). The set state has five types including "unknown", "absence", "presence", "in use", and "disposable". The diagram defines settability, usability, and disposability of the reaction vessel in each state. The control device 115 confirms the position state of the holding position accessed by the expendable item transport unit 112 to determine whether or not the reaction vessel is disposable, usable, or settable. If the determination result is negative, the control device 115 controls to skip the operation.

Definition of the position state at the holding position of the reaction promotion unit 108 attains the operation at the start of analysis according to the first embodiment as illustrated in FIG. 4 as well as efficient disposal of the reaction vessel even in the analysis operation. The expendable item transport unit 112 is allowed to determine the operation which can be performed at the holding position. It is possible to reduce the risks, for example, erroneous setting of the reaction vessel at the holding position where the reaction vessel has been already set, disposal of the reaction vessel which contains the reagent in the measurement process before the end of the measurement, and inappropriate dispensing operation.

The present embodiment is configured to be especially efficient for the composite type automatic analyzer which attains multiple kinds of measurements by itself. The composite type automatic analyzer allows a plurality of measurement systems to share the single mechanism for optimizing the mechanism configuration and the device cost reduction. For example, if the reaction promotion unit 108 is shared by those measurement systems, the use of only the operating sequence is likely to increase the risk of erroneous processing.

The present invention which is not limited to the above-described embodiments includes various modifications. For example, the embodiments have been described in detail for easy understanding of the present invention. Therefore, it is not necessarily limited to be configured to have all the components as described above. It is possible to add a part of the structure of one embodiment to the structure of another embodiment. It is further possible to add, remove, and replace the other structure to, from, and with other structures of the embodiments.

### Reference Signs List

- 100:: automatic analyzer
- 101:: specimen vessel
- 102:: specimen transport unit
- 103:: reagent vessel
- 104:: reagent storage unit
- 105:: specimen dispensing unit
- 106:: reagent dispensing unit
- 107:: stirring unit
- 108:: reaction promotion unit
- 109:: measurement unit
- 110:: specimen aspiration position
- 111:: expendable item storage unit
- 112:: expendable item transport unit
- 113:: reagent dispensing nozzle washing unit
- 114:: stirring rod washing unit
- 115:: control device
- 201:: setting position
- 202:: disposal position

## Claims

1. An automatic analyzer comprising:
a reaction promotion unit that has a plurality of holding positions where a reaction vessel is arranged; and
an expendable item transport unit that accesses a first position and a second position of the reaction promotion unit,
wherein the reaction promotion unit regularly operates in each operation cycle, and the holding position located at the second position during a first operation cycle is moved to the first position after an n (n: integer) operation cycle,
the first position is a position where the expendable item transport unit sets the reaction vessel in the reaction promotion unit and the second position is a position where the expendable item transport unit disposes of the reaction vessel from the reaction promotion unit, and
from a first operation cycle to an n-th operation cycle, the expendable item transport unit performs an operation of disposing of the reaction vessel from the second position without performing an operation of setting the reaction vessel at the first position in each operation cycle, and performs an operation of setting the reaction vessel at the first position and an operation of disposing of the reaction vessel from the second position in each operation cycle after an (n+1)-th operation cycle.

2. The automatic analyzer according to claim 1, wherein
the expendable item transport unit transports a new reaction vessel to the first position in each operation cycle after the (n+1)-th operation cycle, sets the new reaction vessel at the holding position located at the first position, then is moved to the second position, takes out the reaction vessel set at the holding position located at the second position, and transports the reaction vessel to a disposal unit to dispose of the reaction vessel.

3. The automatic analyzer according to claim 1, wherein
the reaction promotion unit sets the reaction vessel on a circumference and performs a predetermined amount of rotational operation in each operation cycle.

4. An automatic analyzer comprising:
a reaction promotion unit that has a plurality of holding positions where a reaction vessel is arranged;
an expendable item transport unit that accesses a first position and a second position of the reaction promotion unit; and
a control device that manages a position state for each holding position of the reaction promotion unit,
wherein the position state includes a first state indicating that arrangement of the reaction vessel is unknown, and a second state indicating that the reaction vessel is not arranged,
the first position is a position where the expendable item transport unit sets the reaction vessel in the reaction promotion unit and the second position is a position where the expendable item transport unit disposes of the reaction vessel from the reaction promotion unit, and
the expendable item transport unit performs a reaction vessel setting operation when a position state of the holding position located at the first position is the second state, and performs a reaction vessel disposal operation when a position state of the holding position located at the second position is the first state.

5. The automatic analyzer according to claim 4, wherein
the control device sets the position state of all the holding positions of the reaction promotion unit as the-first state when an analysis operation is started.

6. The automatic analyzer according to claim 5, wherein
the expendable item transport unit transports a new reaction vessel to the first position in each operation cycle when the position state of the holding position located at the first position is the second state, sets the new reaction vessel at the holding position located at the first position, then is moved to the second position, takes out the reaction vessel set at the holding position located at the second position when the position state of the holding position located at the second position is the first state, and transports the reaction vessel to a disposal unit to dispose of the reaction vessel.

7. The automatic analyzer according to claim 6, wherein
the control device shifts the position state of the holding position where the expendable item transport unit performs the reaction vessel setting operation from the second to a third state, and shifts the position state of the holding position where the expendable item transport unit performs the reaction vessel disposal operation to the second state.

8. The automatic analyzer according to claim 7, wherein
the control device shifts the position state of the holding position, which is the third state, to a fourth state by performing a dispending operation on the set reaction vessel by a dispensing unit, and shifts the position state of the holding position, which is the fourth state, to a fifth state by end of a holding period in the reaction promotion unit.

9. The automatic analyzer according to-claim 8, wherein
the expendable item transport unit further performs the reaction vessel disposal operation when the position state of the holding position located at the second position is the fifth state.
